# EUROPEAN PATENT APPLICATION

(11) **EP 1 577 967 A1**
(43) Date of publication of application: **21.09.2005**
(21) Application number: 04251576.7
(22) Date of filing: 19.03.2004
(51) Int. Cl.: H01M 2/10

(54) **Li-battery for a webpad**

(71) Applicant: Tatung Co., Ltd., Taipei City 104, R.O.C. (TW)
(72) Inventor: Lee, Chia-Lung, Taichung County 436 R.O.C. (TW); Chen, Lii-Hwang, Taipei County 241 R.O.C. (TW)
(74) Representative: Tranter, Andrew David

(57) **Abstract**

An Li-battery is constructed to include two Li-polymer battery cells arranged in a stack, and a flat plastic housing containing the Li-polymer battery cells, the flat plastic housing having a top side, a bottom side, a plurality of openings symmetrically formed at the top and bottom side, and a plurality of thin-sheet metal face panels fixedly mounted in the openings.

## Description

### BACKGROUND OF THE INVENTION

### 1. Field of the Invention

The present invention relates to L-batteries and, more particularly, to a flat type Li-battery for a webpad.

### 2. Description of Related Art

Comparing to notebook computers, tablet PCs, or PDAs, a webpad is a product of new technology. Normally, a notebook computer or tablet PC has a relatively high-level data processing capability, and is superior to desk computers in mobility. A tablet PC has further a touch-control screen for handwriting input. Both the notebook computer and tablet PC are designed for all consumers in the market. A PDA has a relatively low-level world processing capability, for example, the function of address book or notebook for electronized word working. A PDA is also designed for the complete range of consumers found in the market.

The so-called webpad in the invention is a product functionally set between a notebook computer and a PDA. It has a weight relatively lighter than a notebook computer, and provides the function of touch-control input of a tablet PC. More particularly, a webpad has wireless network connection capability. For example, through an 802.11b wireless network card, a webpad can let important data computing work be handled by a remote mainframe. For the advantages of wireless network connection and accurate wireless data access capability, a webpad is practical for use in hospitals, wholesale centers, or distribution centers, or for use as an electronic satchel for school, and thus is distinguished from the broad use of the previously described devices.

Structurally, a webpad can be regarded as a notebook computer without a cover, i.e., a webpad integrates a LCD panel with other hardware as a tablet PC, with touch-control input function.

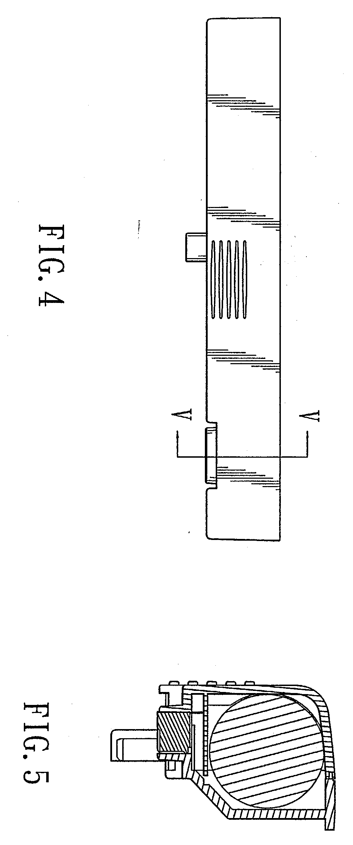

FIG. 4 is a front view of a Li-ion battery for a webpad/notebook computer according to the prior art. FIG. 5 is a sectional view taken along line V-V of FIG. 4. Although Li-ion battery eliminates the problem of "memory effect" and its capacitance is acceptable, the structure of the Li-ion battery is still restricted to cylindrical steel cells so as to safely seal the battery solution, for Li-ion is highly active. Due to the use of cylindrical cells, there is a limitation to the overall shape and thickness of the Li-ion battery. For the sakes of safety and electrical insulation,'the cylindrical rigid cells must be encased with a thick plastic shell, which greatly increases the weight of the battery. Using such a Li-ion battery would inevitably increases the weight of the webpad, thereby causing the webpad to be inconvenient to carry and somewhat eliminating its intended function.

### SUMMARY OF THE INVENTION

It is the main object of the present invention to provide a Li-battery for a webpad, which has a flat shape that facilitates free design of the webpad.

It is another object of the present invention to provide a Li-battery, which reduces the battery weight and maintains the rigidity of the battery shell.

To achieve these and other objects of the present invention, the Li-battery comprises at least one Li-polymer battery cell, and a flat plastic housing, which houses the at least one Li-polymer battery cell. The flat plastic housing has a top side, a bottom side, a plurality of openings formed at the top side and the bottom side, and a plurality of thin metal sheets fixedly mounted in the openings.

### BRIEF DESCRIPTION OF THE DRAWINGS

FIG. 1 is a schematic drawing showing the use of a Li battery according to the present invention.
FIG. 2 is an elevational view of the Li battery according to the present invention.
FIG. 3 is a longitudinal view in section of the Li battery according to the present invention.
FIG. 4 is a front view of a Li battery according to the prior art.
FIG. 5 is a sectional view taken along line V-V of FIG. 4.

### DETAILED DESCRIPTION OF THE PREFERRED EMBODIMENT

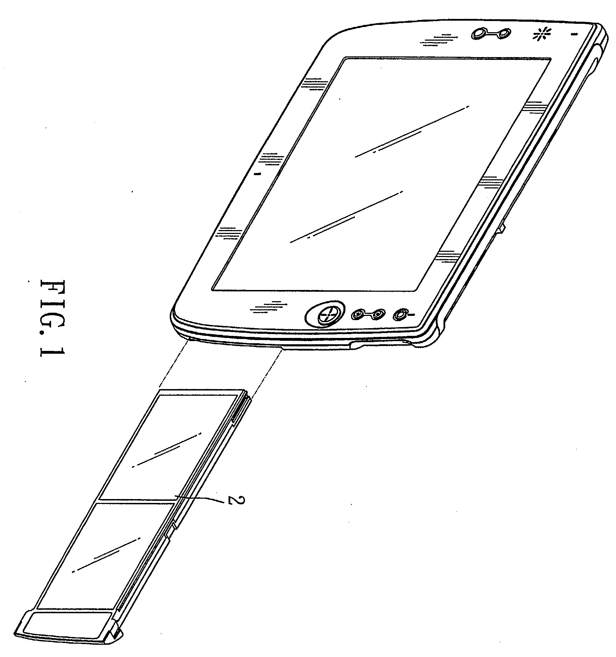

Referring to FIG. 1, a Li battery 2 in accordance with the present invention has a flat shape insertable into a webpad from one side of the webpad. The Li battery is firmly secured to the inside of the webpad after its insertion into the webpad. This side-insertion battery loading design keeps the back panel of the webpad in unity. According to conventional battery loading designs, a battery chamber is disposed at the back panel of the webpad (or notebook computer). The webpad (or notebook computer) tends to be vibrated when the user put it on a flat surface after removal of the battery from the battery chamber at the back panel. When holding the webpad (or notebook computer), the user's fingers had better kept away from the battery chamber at the back panel in order not to touch the contact in the chamber. According to the present invention, only a small hole is used to house the Li battery of the webpad whereby the aforementioned drawbacks are eliminated.

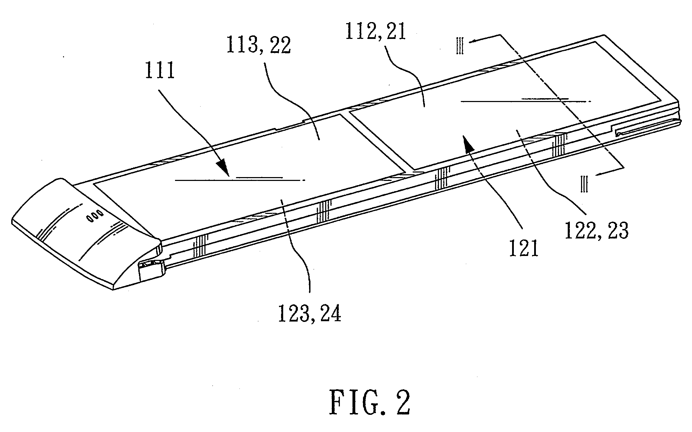

Referring to FIG. 2, the Li battery comprises an electrically insulative plastic housing **1** formed of an upper cover shell **11** and a bottom cover shell **12** abutted against each other. The Li battery has a top side **111,** a bottom side **121,** a plurality of openings **112,113,122,123** symmetrically formed in the top side **111** and the bottom side **121,** and a plurality of thin metalsheet **21,22,23,24** respectively mounted in the openings **112,113,122,123.** The thin metal sheets **21,22,23,24** can be independent ones. Alternatively, the thin metal sheets **21,22** can be formed integral with each other, forming an independent sheet; the thin metal sheets **23,24** can be formed integral with each other, forming another independent sheet. The use of the metal sheets **21,22,23,24** to substitute for plastic material at the openings **112,113,122,123** has the advantages of (1) reducing the weight of the cover shells and improving the rigidity of the cover shells, and (2) reducing the wall thickness of the cover shells and relatively increasing the storage space for Li battery cells to increase the capacitance of the Li battery.

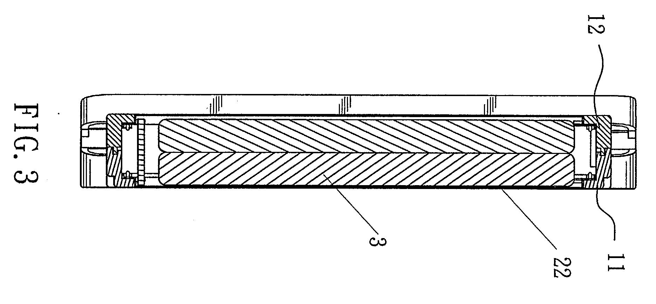

FIG. 3 is a sectional view taken along line III-III of FIG. 2. As illustrated, two Li-polymer battery cells **3** are arranged in a stack inside the cover shells **11** and **12.** According to the present preferred embodiment, the thickness of the metal face panel **22** is about 0.2mm. In comparison to conventional Li-ion batteries that have a thickness of the plastic cover shells ranging from 1mm to 2mm, the Li-battery of the present invention has smaller thickness and weight.

The plastic upper cover shell **11** and bottom cover shell **12** may be made by means of any of a variety of fabrication methods, but preferably, injection molding. The plastic upper cover shell **11** and bottom cover shell **12** can be fastened together by screws, bonding, lap joint, tongue-and-groove joint, tenon-and-mortise joint, or any of a variety of fastening measures. The metal face panels **21,22,23,24** are preferably made of stainless steel. Further, the metal sheets **21,22,23,24** can be separately made, and then fastened to the cover shells **11,12** by screws, bonding, lap joint, tongue-and-groove joint, tenon-and-mortise joint, or any of a variety of fastening measures. Alternatively, the cover shells **11,12** can be directly molded on the metal sheets **21,22,23,24.**

Although the present invention has been explained in relation to its preferred embodiment, it is to be understood that many other possible modifications and variations can be made without departing from the spirit and scope of the invention as hereinafter claimed.

## Claims

1. A Li-battery for webpad comprising:
at least one Li-polymer battery cell; and
a flat plastic housing containing said at least one Li-polymer battery cell, said flat plastic housing having a top side, a bottom side, a plurality of openings formed at said top side and said bottom side, and a plurality of thin metal sheets fixedly mounted in said openings.

2. The Li-battery as claimed in claim 1, wherein said flat housing is comprised of an upper cover shell and a bottom cover shell abutted to said upper cover shell.

3. The Li-battery as claimed in claim 2, wherein said upper cover shell and said bottom cover shell are injection-molded from plastics.

4. The Li-battery as claimed in claim 2, wherein said upper cover shell and said bottom cover shell are fastened to each other by bonding.

5. The Li-battery as claimed in claim 1, wherein said thin metal sheet is one piece and formed integral with the top side and bottom side of said flat plastic housing.

6. The Li-battery as claimed in claim 1, wherein said thin metal sheets are made of stainless steel.
